# EUROPÄISCHE PATENTSCHRIFT

(11) **EP 1 522 211 B1**
(45) Veröffentlichungstag und Bekanntmachung des Hinweises auf die Patenterteilung: **23.11.2005**
(21) Anmeldenummer: 03798135.4
(22) Anmeldetag: 27.08.2003
(51) Int. Cl.: H05G 1/30

(54) **STEUERSCHALTUNG ZUM STEUERN EINER ELEKTRONENEMISSIONSVORRICHTUNG**
CONTROL CIRCUIT FOR CONTROLLING AN ELECTRON EMISSION DEVICE
CIRCUIT DE COMMANDE DESTINE A LA COMMANDE D'UN DISPOSITIF D'EMISSION ELECTRONIQUE

(30) Priorität: 04.09.2002 DE 10240885; 06.09.2002 DE 10241433
(43) Veröffentlichungstag der Anmeldung: 13.04.2005
(73) Patentinhaber: Fraunhofer-Gesellschaft zur Förderung der angewandten Forschung e.V., 80686 München (DE)
(72) Erfinder: EICHHOLZ, Jörg, 25560 Warringholz (DE)
(74) Vertreter: Zinkler, Franz
(86) Internationale Anmeldenummer: PCT/EP2003/009486
(87) Internationale Veröffentlichungsnummer: WO 2004/030422

(56) Entgegenhaltungen:
- WO-A-00/60632
- US-A- 4 181 857
- US-A1- 2001 016 031
- PATENT ABSTRACTS OF JAPAN vol. 015, no. 482 (E-1142), 6. Dezember 1991 (1991-12-06) & JP 03 210798 A (TOSHIBA CORP), 13. September 1991 (1991-09-13)

## Beschreibung

Die vorliegende Erfindung bezieht sich auf eine Steuerschaltung zum Steuern einer Elektronenemissionsvorrichtung. Insbesondere bezieht sich die vorliegende Erfindung auf eine Steuerschaltung, die zum Steuern von sogenannten Carbon Nano Tubes, die in einem Array angeordnet sind, geeignet ist.

Mit der Entwicklung der IC-Technologie (IC = Integrated Circuit) wächst zunehmend die Bedeutung der Erzeugung von immer kleineren Strukturgrößen auf einem Substrat. Eine der Basistechnologien zur Herstellung von ICs ist die Lithographie, bei der ein ganzflächig auf einen Wafer aufgebrachter Lack mit Hilfe einer Maske, die an bestimmten Stellen entweder undurchsichtig oder durchsichtig ist, belichtet wird. Hierbei wird ein Lichtstrahl einer vorbestimmten Wellenlänge erzeugt, mit Hilfe von optischen Linsen unter Ausnutzung des Phänomens der Lichtbrechung mit einer besonderen Anordnung fokussiert und dann auf den Wafer gerichtet, um den dort aufgebrachten Lack zu belichten. Die mit Hilfe dieser Technologie erreichbare Auflösung hängt von der Lichtwellenlänge ab. Je kleiner die Lichtwellenlänge ist, desto kleinere Strukturgrößen können erzielt werden. Die Lichtwellenlänge kann wegen optischer Übertragungseigenschaften der zur Lichtfokussierung verwendeten Linsen jedoch nicht beliebig mitverkleinert werden. Um trotz dieser physikalischen Grenze noch kleinere Strukturen zu erzeugen, ist man an Technologien angewiesen, bei denen beispielsweise Elektronen statt Licht zur Bestrahlung des Lacks verwendet werden.

Dabei werden die Elektronen von einer geeigneten Elektronenemissionsvorrichtung emittiert, geeignet fokussiert und auf den Wafer gerichtet. Da auf der Basis von nur einer Elektronenemissionsvorrichtung nur punktuell ein sehr kleiner Lackbereich (Pixel) bestrahlt werden kann, ist es von Vorteil, mehrere Elektronenemissionsvorrichtungen zu einem Array zusammenzufassen, um auch größere Lackbereiche gleichzeitig und gezielt bestrahlen zu können, damit die gewünschten kleinen Strukturen schneller als bei der Verwendung von nur einer Elektronenemissionsvorrichtung erzeugt werden können. Würde man beispielsweise eine Braunsche Röhre zur Elektronenemission heranziehen, so ist es für einen Fachmann naheliegend, daß bereits aufgrund der notwendigerweise großen physikalischen Abmessung eines derartigen Arrays nur sehr grobe Strukturen erzeugt werden könnten. Aus diesem Grund ist man auf Elektronenemissionsvorrichtungen angewiesen, die geringe Abmessungen aufweisen, wie beispielsweise die eingangs erwähnten Carbon Nano Tubes.

Bei den Carbon Nano Tubes (CNT) handelt es sich im wesentlichen um mehrere zumeist zylindrische Kohlenstoffgebilde mit einem Durchmesser von einigen Nanametern, die auf einem Substrat angeordnet sind und eine Steuerelektrode aufweisen. Wird nun an diese Steuerelektrode eine elektrische Steuerspannung von beispielsweise einigen 10V angelegt, so nehmen die CNT einen Erregungsstrom auf. Das an der der Spitze dieser Kohlenfasergebilde entstandene Feld verursacht eine Feldemission der Elektronen.

Aufgrund der geringen Abmessungen sind die CNT vorteilhaft, weil nun ein Array von Elektronenstrahlen erzeugt werden kann, mit dem die gewünschten kleinen Strukturen im Vergleich zu einem einzelnen Elektronenstrahl schneller erzeugt werden, da ein CNT-Array zu einem Zeitpunkt mehrere Pixel auf dem Wafer bestrahlen kann.

Voraussetzung zur Erzielung der gewünschten Strukturen mit Hilfe eines CNT-Arrays ist jedoch, daß jeder Pixel mit einer genauen Strahlendosis bestrahlt wird, die weder übernoch unterschritten werden darf. Ist die Dosis zu groß, so wird ein zu großer Strukturpunkt erzeugt. Ist hingegen die Dosis zu klein, so wird die notwendige Energiedosis zur Belichtung des Lacks nicht erreicht, der Lack an der Stelle also nicht belichtet und es entsteht kein Strukturpunkt oder ein zu kleiner Strukturpunkt.

Aufgrund der mit einer Erzeugung von Nanostrukturen verbundenen Herstellungsproblematik hat ein CNT-Array jedoch große Abweichungen bezüglich der emittierten Elektronendosis im Array. Dies hat zur Folge, daß ein CNT-Array neben funktionsfähigen CNT auch einige CNT aufweist, die eine zu geringe Elektronendosis emittieren. Darüber hinaus ist es denkbar, daß einige in dem Array angeordneten CNT defekt sind und gar keine Elektronen emittieren. Wenn nun ein CNT-Array zur Bestrahlung eines Wafers herangezogen wird, so werden neben den Punkten der gewünschten Größe auch gar keine oder zu kleine oder zu große Punkte erzeugt. Aufgrund dieser Herstellungsproblematik und der damit verbundenen erreichbaren geringen Auflösung ist eine Verwendung von CNT-Arrays - obgleich wie oben ausgeführt wünschenswert - für Bestrahlungszwecke, die eine hohe Auflösung erfordern, bisher nicht möglich.

Die Aufgabe der vorliegenden Erfindung besteht darin, eine Steuerschaltung und ein Verfahren zum Steuern einer Elektronenemissionsvorrichtung sowie ferner ein Array zum Steuern einer Multielektronenemissionsvorrichtung zu schaffen, die eine Bestrahlung mit hoher Auflösung ermöglichen.

Diese Aufgabe wird durch eine Steuerschaltung gemäß Anspruch 1, ein Verfahren zum Steuern einer Elektronenemissionsvorrichtung gemäß Anspruch 15 oder ein Array zum Steuern einer Multielektronenemissionsvorrichtung gemäß Anspruch 16 gelöst.

Die vorliegende Erfindung basiert auf der Erkenntnis, daß eine hohe Auflösung mit einem beispielsweise aus CNT bestehenden Array dadurch erreichbar ist, daß die CNT einzeln oder auch in kleineren Gruppen, die einige CNT umfassen, mit einer Steuerschaltung versehen werden, wobei die Steuerschaltung eindeutig die emittierte Elektronendosis anhand eines Erregungsstroms, der von den CNT aufgenommen wird, erfaßt, um bei Erreichen einer gewünschten Dosis die entsprechenden CNT abzuschalten. Zusätzlich wird erfindungsgemäß der Betrag des Erregungsstroms erfaßt, um festzustellen, ob die entsprechenden CNT überhaupt in der Lage sind, innerhalb einer vorbestimmten Zeitdauer eine ausreichende Dosis zu liefern. Ist der Betrag des Erregungsstroms zu klein, so wird die erfindungsgemäße Steuerschaltung die entsprechenden CNT deaktivieren, damit keinen unfertigen Punkte etc. auf dem Wafer generiert werden.

Die von den CNT emittierte Ladungsmenge hängt von dem Betrag eines Erregungsstroms ab, der von diesen CNT aufgenommen wird. Zur Bestimmung der von den CNT emittierten Ladungsmenge kann daher dieser Erregungsstrom herangezogen werden. Hierbei wird ausgenutzt, daß die von einem Strom transportierte Ladung innerhalb eines Zeitintervalls aus einem Integral über den Stromverlauf innerhalb dieses Zeitintervalls bestimmt werden kann. Um festzustellen, ob eine bestimmte Ladungsmenge von den CNT emittiert worden ist, reicht es jedoch aus zu überwachen, ob diese Ladungsmenge einen vorbestimmten Ladungsschwellwert erreicht hat. Ist dieser Ladungsschwellwert erreicht, so können die CNT abgeschaltet werden, indem der Erregungsstrom abgeschaltet wird. Eine ordnungsgemäße Funktion der CNT wird ebenfalls auf der Basis des Erregungsstroms festgestellt, indem überwacht wird, ob der Betrag des Erregungsstroms einen vorgegebenen Stromschwellwert erreicht. Wird dieser Stromschwellwert nicht erreicht, so ist es gleichbedeutend damit, daß eine zur Lackbestrahlung notwendige Ladungsmenge innerhalb eines vorbestimmten Zeitintervalls von den CNT nicht emittiert werden kann. Die CNT können in diesem Fall deaktiviert werden, indem der Erregungsstrom abgeschaltet wird.

Ein Vorteil der vorliegenden Erfindung besteht darin, daß die Steuerschaltung zum Steuern der CNT auf der Basis von zwei meßbaren Größen ausgeführt ist, nämlich des Betrags des Erregungsstroms und der von dem Erregungsstrom transportierten Ladungsmenge. Gemäß einem Ausführungsbeispiel werden jeweils Komparatoren eingesetzt, um zu überwachen, ob der Betrag des Erregungsstroms einen vorbestimmten Stromschwellwert erreicht sowie ob die von dem Erregungsstrom transportierte Ladungsmenge einen vorbestimmten Ladungsschwellwert erreicht. Da es sich bei den Komparatoren um Standard-Bauelemente handelt, kann die erfindungsgemäße Steuerschaltung daher kostengünstig realisiert werden.

Ein weiterer Vorteil der vorliegenden Erfindung besteht darin, daß sowohl der Betrag des Erregungsstroms als auch die von dem Erregungsstrom transportierte Ladungsmenge besonders genau überwacht werden können, da hierzu nicht notwendigerweise der Erregungsstrom selbst herangezogen werden muß. Gemäß einem Ausführungsbeispiel werden mit Hilfe eines Stromspiegels mehrere Hilfsströme erzeugt, die in einem vorbestimmten Zusammenhang zu dem Erregungsstrom sind. Auf der Basis dieser Hilfsströme werden ohne eine Beeinflussung des Erregungsstroms sowohl der Betrag des Erregungsstroms als auch die Ladungsmenge überwacht.

Bevorzugte Ausführungsbeispiele der vorliegenden Erfindung werden nachfolgend bezugnehmend auf die beiliegenden Zeichnungen näher erläutert. Es zeigen:
- Fig. 1: die erfindungsgemäße Steuerschaltung zum Steuern einer Elektronenemissionsvorrichtung;
- Fig. 2: ein Ausführungsbeispiel der erfindungsgemäßen Steuerschaltung;
- Fig. 3: ein weiteres Ausführungsbeispiel der erfindungsgemäßen Steuerschaltung; und
- Fig. 4a bis 4c: eine Skizze der Spannungs- bzw. Potentialsituation zwischen Steuerschaltung, Carbon Nano Tube und zu belichtendem Substrat.

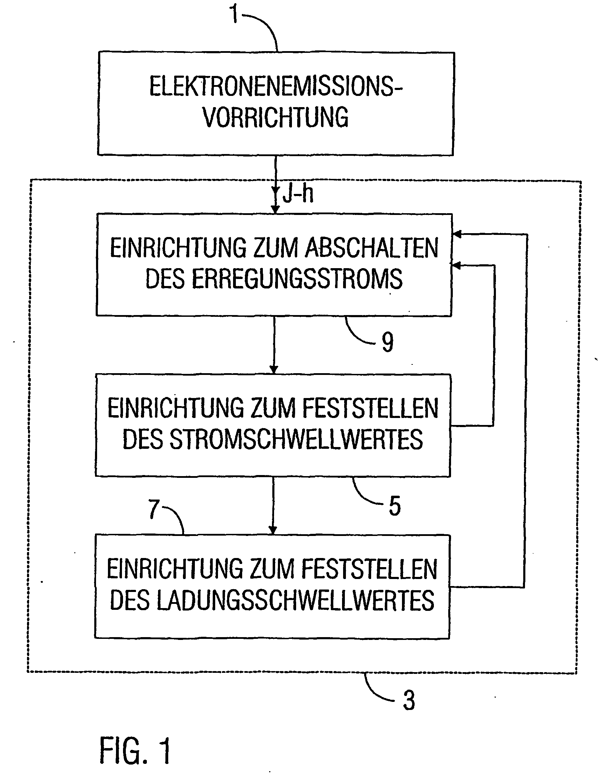

Fig. 1 zeigt eine Anordnung bestehend aus einer Elektronenemissionsvorrichtung 1, die von einer erfindungsgemäßen Steuerschaltung 3 gesteuert werden soll. Letztere umfaßt eine Einrichtung 5, die überwacht, ob der Betrag des von der Elektronenemissionsvorrichtung 1 aufgenommenen Erregungsstroms 4 einen vorgegebenen Stromschwellwert überschreitet. Die Steuerschaltung 3 beinhaltet ferner eine Einrichtung 7, die überwacht, ob die von der Elektronenemissionsvorrichtung emittierte Ladungsmenge einen vorgegebenen Ladungsschwellwert überschreitet. Die erfindungsgemäße Steuerschaltung zum Steuern einer Elektronenemissionsvorrichtung beinhaltet ferner eine Einrichtung 9 zum Abschalten des Erregungsstroms, mit deren Hilfe die Elektronenemissionsvorrichtung 1 durch das Abschalten des Erregungsstroms 4 im Falle des Überschreitens des Ladungsschwellwerts oder des Unterschreitens des Stromschwellwerts abgeschaltet wird. Die Einrichtung 9 zum Abschalten des Erregungsstroms kann mit Hilfe einer in Fig. 1 nicht eingezeichneten weiteren Funktionalität für z.B. einen nachfolgenden Bestrahlungsvorgang wieder eingeschaltet werden, so daß die Elektronenemissionsvorrichtung 1 erneut einen Erregungsstrom aufnehmen und Ladung emittieren kann.

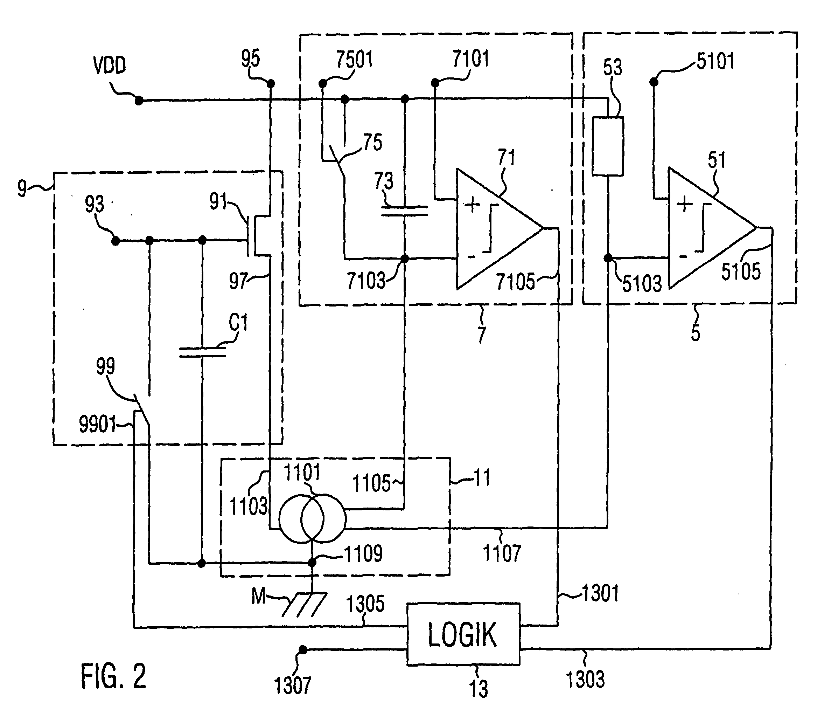

Fig. 2 zeigt ein bevorzugtes Ausführungsbeispiel der Erfindung, wobei die Einrichtung 9, die Einrichtung 5 sowie die Einrichtung 7 zum Feststellen des Ladungsschwellwerts gestrichelt markiert sind.

Die Einrichtung 9 zum Abschalten des Erregungsstroms besteht im wesentlichen aus einem Transistor 91, der als Hochvolttransistor ausgeführt werden kann, mit einem Steuereingang 93, einem Eingang 95 sowie einem Ausgang 97. Der Eingang 95 des Transistors 91 ist mit einer in Fig. 2 nicht eingezeichneten Steuerelektrode einer Elektronenemissionsvorrichtung verbunden, und zwar derart, daß der Erregungsstrom bezüglich seiner technischen Stromrichtung in diesen Eingang hineinfließen kann - die Elektronenemissionsvorrichtung nimmt diesen Erregungsstrom bezüglich seiner physikalischen Stromrichtung auf.

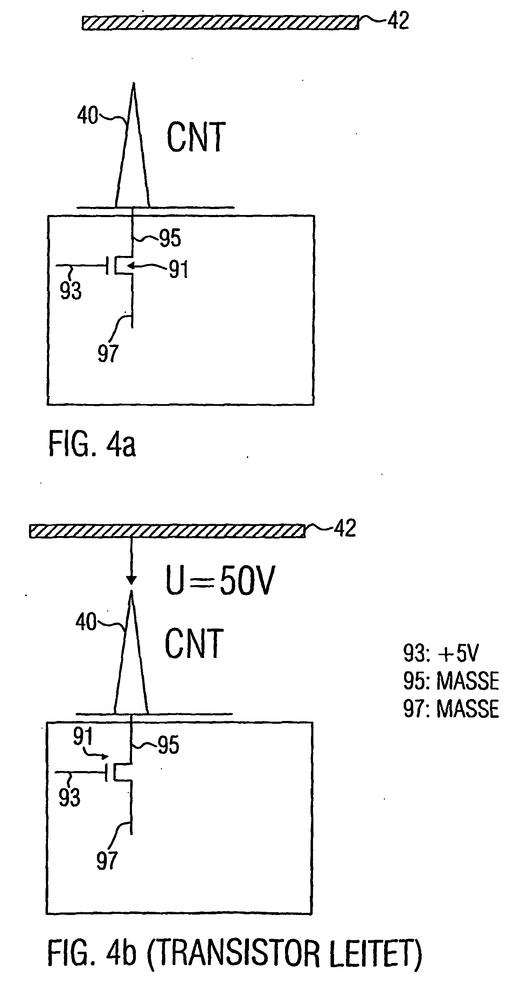

Fig. 4a zeigt eine schematische Darstellung des Transistors 91 mit einer CNT 40, die in der Nähe eines zu belichtenden Substrats 42 angeordnet ist. Der "Rest" der Steuerschaltung ist in der Figur 4a nicht detailliert dargestellt. Lediglich beispielhaft wird nachfolgend davon ausgegangen, daß der Transistor 91 ein selbstsperrender N-MOSFET ist.

Das zu belichtende Substrat wird auf ein Potential bezüglich Masse von z. B. einigen 10 V bis +50 V gebracht, was einer typischen Betriebsspannung für CNTs entspricht.

Fig. 4b zeigt die Situation, bei der am Steuereingang 93 des Transistors eine Spannung gegen Masse von +5 V angelegt ist und das Substrat 42 auf +50 V gegen Masse liegt. Aufgrund der positiven Steuerspannung leitet der Transistor 91, so daß die Spannung von +50 V zwischen dem Substrat 42 und der Spitze der CNT abfällt, was dazu führt, daß durch den Transistor ein Strom fließt und Elektronen von der CNT auf das Substrat fliegen, wodurch eine Lackbelichtung erreichbar ist.

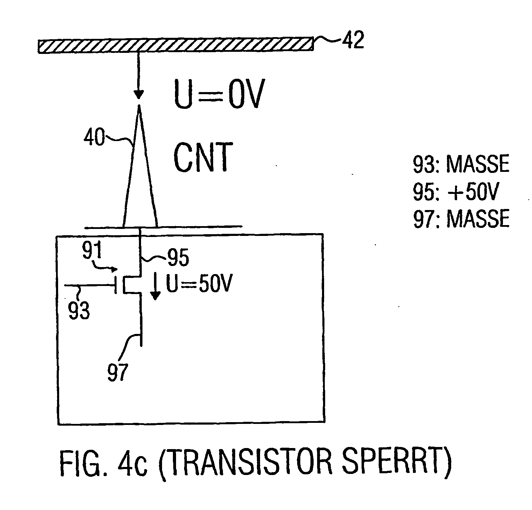

Fig. 4c zeigt dagegen die Situation, bei der der Steuereingang 93 des Transistors 91 auf Masse (0 V) liegt, der Transistor also sperrt. In diesem Fall fällt zwischen dem Substrat 42 und der CNT keine Spannung ab, weshalb keine Elektronen von der CNT emittiert werden. Die Spannung von +50 V fällt dagegen zwischen dem Knoten 95 und dem Knoten 97 ab, wobei der Knoten 97 auf einem Bezugspotential, wie z. B. Masse, liegt.

Die Spannung an dem Substrat 42 hat einen Betrag von typischerweise einigen 10 Volt bis 50V, der ausreichend ist, um aufgrund der Feldemission die Elektronen aus der Spitze einer Quelle, die die Elektronenemissionsvorrichtung beinhaltet, austreten zu lassen. Bei den CNT 40 besteht diese Quelle aus einigen meist zylindrischen Kohlenstoffgebilden mit einem Durchmesser von einigen Nanometern, die sich auf einem Substrat befinden.

An den Steuereingang 93 ist, wie es in den Fig. 4b und 4c gezeigt ist, eine Spannung zum Steuern der Leitfähigkeit des Transistors 91 anlegbar. Wird diese Spannung angelegt so wird der z.B. selbstsperrende Transistor 91 "eingeschaltet", und der in den Eingang 95 hineinfließende Erregungsstrom an den Ausgang 97 weitergeleitet. Ist der Transistor 91 selbstleitend, so wird er durch die angelegte Spannung "ausgeschaltet", wodurch der Erregungsstrom nicht mehr fließt.

Wird der Steuereingang 93 mit einer Masse M verbunden, so geht der Transistor 91 in einen Sperrzustand über und schaltet so den Erregungsstrom ab. Lediglich optional befindet sich zwischen dem Steuereingang 93 und der Masse M eine Kapazität C1, die zum "Speichern" der Spannung an dem Knoten 93 des Transistors 91 dient.

Die Einrichtung 9 zum Abschalten des Erregungsstroms beinhaltet ferner einen optionalen Schalter 99, der zwischen dem Steuereingang 93 und der Masse M geschaltet ist, und der ferner einen Steuereingang 9901 umfaßt. In Abhängigkeit von einem an diesem Steuereingang anliegenden Signal wird der Schalter geschlossen oder geöffnet. Dadurch kann der Steuereingang 93 unabhängig von der auf dem Kondensator C1 gespeicherten Ladung mit der Masse M verbunden werden, so daß der beispielsweise selbstsperrende Transistor 91 schnell ausgeschaltet und der Kondensator C1 schnell entladen werden, was für die Erreichung der hohen Auflösung notwendig ist.

Das in Fig. 2 dargestellte Ausführungsbeispiel umfaßt ferner eine Einrichtung 11 zum Erzeugen von mindestens einem Hilfsstrom. Die Einrichtung 11 ist insbesondere dann von Vorteil, wenn der Erregungsstrom möglichst genau gemessen und daher nicht verfälscht werden soll. Besteht zwischen dem Hilfsstrom und dem Erregungsstrom ein vorbestimmter Zusammenhang, so kann sowohl der Stromschwellwert als auch der Ladungsschwellwert auf der Basis dieses Hilfsstroms bestimmt werden.

Die Einrichtung 11 zum Erzeugen von mindestens einem Hilfsstrom kann beispielsweise einen Stromspiegel 1101 umfassen mit einem ersten Eingang 1103, einem zweiten Eingang 1105 sowie einem dritten Eingang 1107 und einem Ausgang 1109, der mit der Masse M verbunden ist. Der erste Eingang 1103 des Stromspiegels 1101 ist mit dem Ausgang 97 des Transistors 91 verbunden, so daß in diesen ersten Eingang der Erregungsstrom hineinfließen und zwei Hilfsströme erzeugen kann, die jeweils in den zweiten Eingang 1105 und in den dritten Eingang 1107 hineinfließen.

Der in den zweiten Eingang 1105 des Stromspiegels 1101 hineinfließende Hilfsstrom wird in dem in Fig. 2 dargestellten Ausführungsbeispiel von der Einrichtung 7 zum Feststellen des Ladungsschwellwerts verwendet. Die Einrichtung 7 umfaßt ferner einen ersten Komparator 71 mit einem ersten Eingang 7101, einem zweiten Eingang 7103 und einen Ausgang 7105. An den Eingang 7101 kann eine vorbestimmte Referenzspannung angelegt werden, die zur Bestimmung des Ladungsschwellwerts herangezogen werden kann. Der zweite Eingang 7103 des Komparators 71 ist über eine Kapazität 73 mit einer Versorgungsspannungsquelle verbunden, die eine Versorgungsspannung V_{DD} liefert. Die Kapazität 73 dient dazu, den in den zweiten Eingang 1105 des Stromspiegels 1101 hineinfließenden Hilfsstrom, der einen vorbestimmten Zusammenhang zu dem Erregungsstrom aufweist, aufzuintegrieren, so daß aufgrund der bekannten Beziehungen (Ladung = Integral I dt und Spannung = l/C Integral I dt, wobei C den Wert der Kapazität 73 beschreibt) an dem zweiten Eingang 7103 eine Spannung anliegt, die proportional zu der von dem Hilfsstrom transportierten Ladung ist.

Der Komparator 71 vergleicht nun die beiden an den Eingängen 7101 und 7103 anliegenden Spannungen und liefert an seinem Ausgang 7105 ein Ergebnis dieses Vergleichs. Ist die am zweiten Eingang 7103 anliegende Spannung größer als diejenige, die an dem ersten Eingang 7101 anliegt, so bedeutet dies, daß die Kapazität bereits eine bestimmte Ladungsmenge aufgenommen hat, die einen Ladungsschwellwert überschritten hat.

An dieser Stelle sei darauf hingewiesen, daß die angeführte Kapazität 73 durch eine beliebige Funktionalität ersetzt werden kann, die ein integrales Verhalten aufweist, wie beispielsweise ein geeignet verschalteter Operationsverstärker.

Parallel zur Kapazität 73 kann ferner ein Schalter 75 mit einem Steuereingang 7501 geschaltet sein, der dazu dient, die Kapazität 73 vor einem neuen Emissionsvorgang der Elektronenemissionsvorrichtung durch Überbrücken zu entladen.

Das in Fig. 2 dargestellte Ausführungsbeispiel beinhaltet ferner einen zweiten Komparator 51 mit einem ersten Eingang 5101, einem zweiten Eingang 5103 sowie einem Ausgang 5105. An den Eingang 5101 ist eine Referenzspannung anlegbar, die zur Bestimmung des Stromschwellwerts herangezogen werden kann. Der zweite Eingang des Komparators ist in diesem Ausführungsbeispiel mit dem dritten Eingang 1107 des Stromspiegels 1101 verbunden, in den ein weiterer Hilfsstrom hineinfließt, der einen vorbestimmten Zusammenhang mit dem Erregungsstrom aufweist. Der zweite Eingang 5103 des Komparators 51 ist ferner über einen Widerstand mit der Spannungsquelle verbunden, die die Spannung V_{DD} liefert. Der durch diesen Widerstand fließende Hilfsstrom verursacht eine Spannung, die an dem zweiten Eingang 5103 anliegt, und die mit der Referenzspannung, die am ersten Eingang 5101 anliegt, verglichen wird. Ist diese Spannung kleiner als die am ersten Eingang 5101 anliegende Referenzspannung, so bedeutet dies, daß der Betrag des Hilfsstroms einen durch die am Widerstand 53 abfallende Spannung repräsentierten Stromschwellwert unterschritten hat. In diesem Fall liegt am Ausgang 5105 des Komparators 51 ein Ausgangssignal vor, das das Unterschreiten des Stromschwellwerts anzeigt.

An dieser Stelle sei darauf hingewiesen, daß der Widerstand 53 durch eine beliebige Funktionalität ersetzt werden kann, die einen Strom in eine Spannung umwandeln kann, wie beispielsweise eine stromgesteuerte Spannungsquelle.

In dem in Fig. 2 dargestellten Ausführungsbeispiel sind die Ausgänge der Komparatoren 71 und 51 mit den Eingängen 1301 und 1303 einer Logik 13 verbunden, die ferner einen ersten Ausgang 1305 und einen zweiten Ausgang 1307 umfaßt, verbunden. Die Logik 13 ist derart ausgeführt, daß die an ihren Eingängen anliegenden Signale mit Hilfe einer geeigneten Verknüpfung, z.B. einer ODER-Verknüpfung, kombiniert bzw. ausgewertet werden und das Ergebnis dieser Operation am ersten Ausgang 1305 anliegt, der weiter mit dem Steuereingang 9901 des Schalters 99 verbunden ist. Wird der Stromschwellwert unterschritten oder wird der Ladungsschwellwert überschritten, so wird der Schalter 99 aufgrund des nun am ersten Ausgang 1305 der Logik 13 anliegenden Signals geschlossen, so daß der Transistor 91 in den Sperrzustand übergeht und den Erregungsstrom ausschaltet. Die beiden Ausgangsignale der Komparatoren 71 und 51 werden in der Logik 13 ferner so miteinander verknüpft, daß der (Hochvolt-)Transistor 91 dann geöffnet wird, wenn die Dosis, d.h. die emittierte Ladungsmenge, den korrekten Wert hat oder der Betrag des Stroms den Stromschwellwert nicht überschritten hat.

Das am zweiten Ausgang 1307 der Logik 13 anliegende Signal ist optional und kann beispielsweise einer weiteren übergeordneten Überwachungseinrichtung zugeführt werden. Dies ist insbesondere dann von Vorteil, wenn mehrere Elektronenemissionsvorrichtungen 1 in einem Array angeordnet sind, wobei jede Elektronenemissionsvorrichtung eine erfindungsgemäße Steuerschaltung aufweisen kann. Das an dem zweiten Ausgang 1307 der Logik 13 anliegende Signal liefert das Identifikationsmerkmal, das einer jeden Steuerschaltung zugeordnet ist, das die Elektronenemissionsvorrichtung in dem Array, das eine Multielektronenemissionsvorrichtung bildet, eindeutig identifiziert. Mit Hilfe dieses Identifikationsmerkmals kann die übergeordnete Überwachungseinrichtung nun eine Mehrzahl von Steuerschaltungen überwachen, um beispielsweise beim Unterschreiten des Stromschwellwerts die betreffende Steuerschaltung zu deaktivieren.

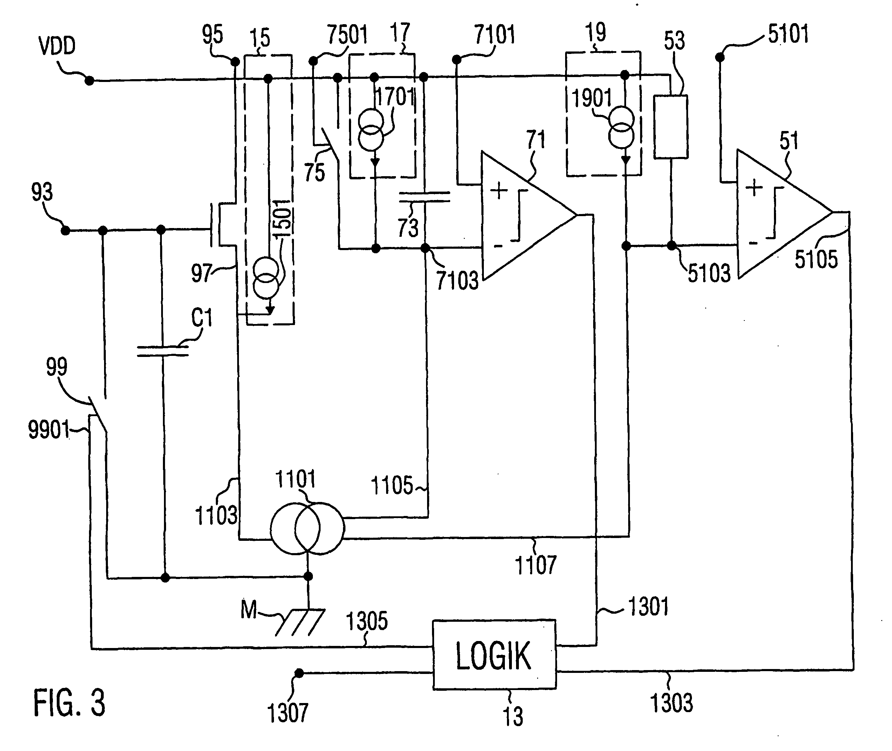

Fig. 3 zeigt ein weiteres Ausführungsbeispiel der Steuerschaltung zum Steuern einer Elektronenemissionsvorrichtung. Da dieses Ausführungsbeispiel eine Reihe von Funktionalitäten aufweist, die bereits in dem in Fig. 2 dargestellten Ausführungsbeispiel enthalten sind, werden im folgenden die Funktionalitäten mit gleichen Bezugszeichen nicht noch einmal beschrieben.

Im Unterschied zu dem in Fig. 2 dargestellten Ausführungsbeispiel beinhaltet die in Fig. 3 dargestellte Einrichtung 9 zum Abschalten des Erregungsstroms zusätzlich eine Strombeaufschlagungsvorrichtung 15, die dazu dient, dem sogenannten Taktdurchgriffseffekt entgegenzuwirken. Dieser Effekt ist auf eine sehr schnelle, steile Änderung eines Potentials eines Knotens zurückzuführen, wobei diese Änderung auch bei den Nachbarknoten zu Potentialschwankungen während und kurz nach dem Umschalten führt, was auf parasitäre Koppelelemente, wie z. B. Koppelkapazität der Knoten, zurückzuführen ist. Dabei wird die Höhe und auch die Dauer der Potentialschwankung durch den durch einen Nachbarknoten fließenden Strom mitbestimmt. Insbesondere bedeutet dies, daß bei stromlosen Knoten, die mit einem Strom beaufschlagt werden, es zu einem besonders starken Taktdurchgriff kommt. Darüber hinaus entstehen dabei Erregungsstromverluste, da beispielsweise die parasitären Kapazitäten von dem Erregungsstrom umgeladen werden. Um diesen Effekt weitestgehend zu vermeiden, wird in alle Zweige ein identischer Biasstrom so geleitet, daß sowohl die Messung des eingeschalteten Stroms über einen Potentialabfall, als auch die Aufintegration des Stromes zur Messung der Ladung nicht verfälscht wird. In dem erfindungsgemäßen Ausführungsbeispiel wird daher ein konstanter (Bias-)Strom permanent in die Schaltung in den Knoten "unterhalb" des Transistors 91 geleitet.

Die Strombeaufschlagungsvorrichtung 15 umfaßt in diesem Ausführungsbeispiel eine Stromquelle 1501, an deren Eingang eine Spannung, z.B. die Spannung V_{DD} anlegbar ist, die parallel zu dem Transistor 91 derart geschaltet ist, daß ein von dieser Stromquelle abgegebener Umladestrom dem Erregungsstrom, der durch den Transistor 91 fließt, überlagert ist. Dieser von der Stromquelle 1501 gelieferte Umladestrom wird nun zu einer Umladung der bereits erwähnten parasitären Koppelkapazitäten herangezogen, so daß hierfür nicht ein Teil des Erregungsstroms verlustig wird. Dies ist insbesondere während des Einschaltens der Einrichtung zum Abschalten des Erregungsstroms 9 von Bedeutung, weil dabei der Schalter 99 geöffnet und an den Steuereingang 93 eine vorbestimmte Spannung angelegt wird, so daß der Transistor 91 nun eingeschaltet und somit leitend wird. Würde man nun auf die Strombeaufschlagungsvorrichtung 15 verzichten, die einen vorbestimmbaren Umladestrom in den Knoten 97 einspeist, so müßte ein Teil des Erregungsstroms zum Umladen der parasitären Kapazitäten aufgebracht werden, so daß die Einrichtung 9 erst nach einer gewissen Zeit in ihren stationären Zustand übergehen würde. Ohne eine derartige Strombeaufschlagungsvorrichtung 15 wäre während dieser Umschaltzeit ein Teil des Stroms nicht meßbar, so daß weder der Stromschwellwert noch der Ladungsschwellwert genügend genau bestimmt werden könnten, was jedoch notwendig ist, damit beispielsweise die von der Elektronenemissionsvorrichtung emittierte Ladungsmenge gezielt dosiert werden kann, wodurch eine hohe Auflösung erreicht wird.

Der durch die Strombeaufschlagungsvorrichtung 15 in den Knoten 97 eingespeiste Strom dient also dazu, die erwähnten parasitären Kapazitäten umzuladen, so daß beim Einschalten der Einrichtung 9 deren stationärer Zustand sich nun schneller einstellt.

An dieser Stelle sei darauf hingewiesen, daß die Realisierung der Strombeaufschlagungsvorrichtung 15 durch die Stromquelle 1501 lediglich eines der möglichen Ausführungsbeispiele darstellt. Im allgemeinen kann der Umladestrom mit Hilfe einer beliebigen Funktionalität erzeugt werden, die einen Umladestrom liefern kann, wie beispielsweise ein geeignet beschalteter Stromspiegel oder auch eine spannungsgesteuerte Stromquelle.

Das in Fig. 3 dargestellte Ausführungsbeispiel beinhaltet ferner eine weitere Strombeaufschlagungsvorrichtung 17, die der Einrichtung 7 zum Feststellen des Ladungsschwellwerts einen weiteren Strom liefert, der von dem von der Strombeaufschlagungsvorrichtung 15 gelieferten Umladestrom abhängig ist. In dem in Fig. 3 dargestellten Ausführungsbeispiel umfaßt die Strombeaufschlagungsvorrichtung 17 eine Stromquelle 1701, deren Ausgang mit dem Knoten 7103 verbunden ist und die parallel zur Kapazität 73 geschaltet ist.

An dieser Stelle sei darauf hingewiesen, daß die in diesem Ausführungsbeispiel zur Realisierung der Strombeaufschlagungsvorrichtung 17 herangezogene Stromquelle 1701 nur eine mögliche Realisierungsform einer Strombeaufschlagungsvorrichtung 17 darstellt. Prinzipiell kann die Strombeaufschlagungsvorrichtung 17 mit Hilfe einer beliebigen Funktionalität realisiert werden, die einen von dem von der Strombeaufschlagungsvorrichtung 15 gelieferten Umladestrom abhängigen Strom liefert.

Des weiteren beinhaltet das in Fig. 3 dargestellte Ausführungsbeispiel eine weitere Strombeaufschlagungsvorrichtung 19, um der Einrichtung zum Feststellen des Stromschwellwerts 5 einen weiteren Strom zuzuführen, der von dem von der Strombeaufschlagungsvorrichtung 15 aufgeprägten Umladestrom abhängig ist. In diesem Ausführungsbeispiel umfaßt die Strombeaufschlagungsvorrichtung 19 eine Stromquelle 1901, deren Ausgang mit dem Knoten 1503 verbunden ist und an deren Eingang eine Spannung anlegbar ist, beispielsweise die Spannung V_{DD}.

An dieser Stelle sei darauf hingewiesen, daß die Strombeaufschlagungsvorrichtung 19 auf viele verschiedene Weisen realisiert werden kann, wie es bereits für die Strombeaufschlagungsvorrichtung 17 diskutiert wurde.

Die von der Strombeaufschlagungsvorrichtung 17 und von der Strombeaufschlagungsvorrichtung 19 gelieferten Ströme dienen dazu, den im eingeschalteten Zustand der Abschaltvorrichtung 9 dem Erregungsstrom überlagerten Umladestrom, der von der Strombeaufschlagungsvorrichtung 15 aufgeprägt wird, derart zu berücksichtigen, daß sowohl der Betrag des Erregungsstroms als auch die emittierte Ladungsmenge unverfälscht und somit genügend genau ermittelt werden können.

Gemäß den in Fig. 2 und in Fig. 3 dargestellten Ausführungsbeispielen liegt die gesamte Elektronik elektrisch gesehen auf Masse und arbeitet mit der für IC-Technologien üblichen Spannung V_{DD} bis 5V. Der Transistor 91 kann dabei als Hochvolttransistor ausgeführt sein, dessen Drain an einer deutlich höheren Spannung als die positive Versorgungsspannung liegt.

Die in Fig. 2 und in Fig. 3 dargestellten Ausführungsbeispiele können ferner eine Regelschaltung aufweisen, die derart ausgebildet ist, daß die an den Steuereingang 93 des Transistors 91 anlegbare Spannung, die als ein Eingangssignal interpretiert werden kann, die Logik 13 zurücksetzt. Die Ladung des Kondensators wird dabei über ein an den Steuereingang 7501 des Schalters 75 anlegbares Reset-Signal zu Null gesetzt, der Transistor 91 geschlossen und der Komparator 51 über eine zuvor definierte Verzögerung eingeschaltet. Der Komparator 51 wird erst nach einer Verzögerung eingeschaltet, damit der stationäre Erregungsstrom überwacht wird. Der Komparator 51 prüft zunächst nach der definierten Verzögerung, ob ein Mindesterregungsstrom fließt. Der Komparator 71 überwacht dabei die Spannungsdifferenz über der Kapazität 73 auf der Basis des gespiegelten und aufintegrierten Erregungsstrom. Die beiden Ausgangssignale der Komparatoren 51 und 71 werden in der Logik 13 geeignet ausgewertet und es wird ein entsprechendes Ausgangssignal (Out) zur Verarbeitung abgeleitet, das am Ausgang 1307 anliegt. Der Schalter 99 wird dann geöffnet, so daß kein weiterer Erregungsstrom durch den Transistor 91 und damit durch eine Elektronenquelle fließt.

Ein weiterer Aspekt der vorliegenden Erfindung betrifft ein Array zum Steuern einer Multielektronenemissionsvorrichtung. Die letztere umfaßt eine Mehrzahl von Elektronenemissionsvorrichtungen, die in einem Array angeordnet sind und entweder einzeln oder, wenn sie zu kleinen Gruppen zusammengefaßt sind, gruppenweise von der erfindungsgemäßen Steuerschaltung gesteuert werden. Umfaßt die Multielektronenemissionsvorrichtung beispielsweise die CNT, so ist es wichtig für eine hohe Auflösung sowie für eine rasche Strukturerzeugung, daß die von den CNT oder von den CNT-Gruppen emittierte Ladungsmenge genügend genau dosiert werden kann. Sind die CNT defekt, d.h. werden entweder keine Elektronen emittiert oder kann die notwendige Ladungsmenge innerhalb eines Zeitintervalls nicht erreicht werden, so müssen die CNT abgeschaltet werden, damit keine unfertigen Strukturpunkte entstehen, was durch eine Deaktivierung der Steuerschaltung und somit Abschaltung des Erregungsstroms erreicht werden kann.

Aufgrund der oben beschriebenen Problematik weist jede in der Multielektronenemissionsvorrichtung enthaltene Elektronenemissionsvorrichtung erfindungsgemäß ein Identifikationsmerkmal, das sie eindeutig identifiziert, wie beispielsweise eine auf der Basis der Array-Koordinaten ausgebildete Adresse. Darüber hinaus ist es notwendig, daß jede Elektronenemissionsvorrichtung eine übergeordnete Überwachungseinrichtung über ihren momentanen Betriebszustand, beispielsweise ob der Betrag des Erregungsstroms einen vorbestimmten Stromschwellwert erreicht, informieren kann. Die in Fig. 2 und in Fig. 3 gezeigten erfindungsgemäßen Ausführungsbeispiele umfassen die Logik 13, an deren zweiten Ausgang 1307 diese Information der übergeordneten Überwachungseinrichtung zur Verfügung gestellt wird. Erreicht beispielsweise der Betrag des Erregungsstroms den vorgegebenen Stromschwellwert nicht, so liefert der erfindungsgemäße Komparator 51 ein entsprechendes Ausgangssignal, so daß nach einer geeigneten Auswertung der beiden Ausgangssignale der Komparatoren 51 und 71 durch die Logik 13 ein entsprechendes Signal an dem Ausgang 1307 anliegt, das der übergeordneten Überwachungseinrichtung anzeigt, daß der Betrag des Stroms den Stromschwellwert unterschreitet, so daß die Steuerschaltung der entsprechenden Elektronenemissionseinrichtung deaktiviert wird.

## Patentansprüche

1. Steuerschaltung zum Steuern einer Elektronenemissionsvorrichtung, die ausgebildet ist, um bei einer angelegten Spannung einen Erregungsstrom aufzunehmen, der mit einer Anzahl von emittierten Elektronen zusammenhängt, mit folgenden Merkmalen:
einer ersten Einrichtung (7) zum Feststellen, ob eine durch den Erregungsstrom transportierte Ladungsmenge einen vorbestimmten Ladungsschwellwert erreicht;
einer zweiten Einrichtung (5) zum Feststellen, ob ein Betrag des Erregungsstroms einen vorbestimmten Stromschwellwert erreicht; und
einer Einrichtung (9) zum Abschalten des Erregungsstroms, sobald die erste Einrichtung (7) feststellt, daß die Ladungsmenge einen vorbestimmten Ladungsschwellwert erreicht hat, oder sobald die zweite Einrichtung (5) feststellt, daß der Betrag des Erregungsstroms kleiner als der vorbestimmte Stromschwellwert ist.

2. Steuerschaltung gemäß Anspruch 1, die ferner folgendes Merkmal aufweist:
eine Einrichtung (11) zum Erzeugen von zumindest einem Hilfsstrom, der in einem vorbestimmten Zusammenhang zu dem Erregungsstrom ist, und wobei die erste Einrichtung (7) und/oder die zweite Einrichtung (5) ausgebildet ist, um auf der Basis von zumindest einem Hilfsstrom zu arbeiten.

3. Steuerschaltung gemäß Anspruch 1 oder 2, wobei die erste Einrichtung (7) folgende Merkmale aufweist:
einen Komparator (71) mit einem ersten und einem zweiten Eingang und einem Ausgang, wobei an dem ersten Eingang eine Referenzspannung anliegt, die zur Bestimmung des Ladungsschwellwerts herangezogen wird; und
einer Kapazität (73) zur Aufnahme einer durch den Hilfsstrom transportierten Ladungsmenge, die proportional zu der durch den Erregungsstrom transportierten Ladungsmenge ist, die mit dem zweiten Eingang des Komparators und einer weiteren Spannungsquelle verbunden ist.

4. Steuerschaltung gemäß Anspruch 3, die ferner einen steuerbaren Schalter (75) umfaßt, der parallel zu der Kapazität (73) geschaltet ist, der nach einer bestimmten Emissionszeit der Elektronenemissionsvorrichtung geschlossen werden kann, um diese Kapazität zu entladen.

5. Steuerschaltung gemäß Anspruch 3 oder 4, wobei die zweite Einrichtung (5) folgende Merkmale aufweist:
einen Komparator (51) mit einem ersten und einem zweiten Eingang, wobei an dem zweiten Eingang eine Referenzspannung anlegbar ist, die zur Bestimmung des Ladungsschwellwerts herangezogen wird;
einen Strom-Spannungswandler (53), der mit einer Spannungsquelle und dem zweiten Eingang des Komparators (51) verbunden ist, der ausgebildet ist, um einen Hilfsstrom in eine Spannung umzuwandeln, die an den ersten Eingang des Komparators (51) anlegbar ist.

6. Steuerschaltung gemäß Anspruch 5, wobei der Strom-Spannungswandler ein resistives Element ist.

7. Steuerschaltung gemäß Anspruch 1, wobei die Einrichtung (9) zum Abschalten des Erregungsstroms folgendes Merkmal aufweist:
einen Transistor (91) mit einem Steuereingang, einem Eingang und einem Ausgang, wobei an den Eingang eine Spannung anlegbar ist, deren Betrag einen für die Elektronenemission der Elektronenemissionsvorrichtung notwendigen Wert nicht unterschreitet.

8. Steuerschaltung gemäß Anspruch 7, die eine Kapazität (C1) umfaßt, die zwischen dem Steuereingang des Transistors (91) und einer Masse verbunden ist, um eine angelegte Steuerspannung dauerhaft zu speichern.

9. Steuerschaltung gemäß Anspruch 2 und 7,
wobei die Einrichtung (11) zum Erzeugen von mindestens einem Hilfsstrom einen Stromspiegel umfaßt mit einem ersten, einem zweiten und einem dritten Eingang und einem Ausgang, wobei der erste Eingang mit dem Ausgang des Transistors (91) verbunden ist;
wobei der zweite Eingang mit dem zweiten Eingang des Komparators (51) verbunden ist;
wobei der dritte Eingang mit dem zweiten Eingang des Komparators (71) verbunden ist; und
der ausgebildet ist, um in Abhängigkeit von einem in den ersten Eingang fließenden Strom einen ersten Hilfsstrom zu erzeugen, der in den zweiten Eingang fließt;
der ausgebildet ist, um in Abhängigkeit von dem in den ersten Eingang fließenden Strom einen zweiten Hilfsstrom zu erzeugen, der in den dritten Eingang fließt;
wobei der Ausgang mit einer Masse verbunden ist.

10. Steuerschaltung gemäß einem der vorhergehenden Ansprüche, die eine Logikschaltung (13) umfaßt, die ausgebildet ist, um ein Ausgangssignal der zweiten Einrichtung (5) zum Feststellen des Stormschwellenwerts und ein Ausgangssignal der ersten Einrichtung (7) zum Feststellen des Ladungsschwellwerts mit einer ODER-Verknüpfung zu kombinieren, und um das Ergebnis dieser ODER-Verknüpfung der Einrichtung (9) zum Abschalten des Erregungsstroms zur Verfügung zu stellen.

11. Steuerschaltung gemäß Anspruch 10, die ferner ausgebildet ist, um das Ergebnis der ODER-Verknüpfung zusammen mit einem Identifikationsmerkmal der Steuerschaltung einer übergeordneten Überwachungseinrichtung zur Verfügung zu stellen.

12. Steuerschaltung gemäß einem der vorhergehenden Ansprüche, bei der die Einrichtung (9) zum Abschalten des Erregungsstroms einen ersten und einen zweiten Knoten aufweist, wobei der erste Knoten mit einer angelegten Spannung verbindbar ist, und wobei zwischen dem ersten und dem zweiten Knoten durch eine Einschaltung eine leitende Verbindung herstellbar ist, wobei der zweite Knoten mit einer Strombeaufschlagungseinrichtung (15) verbunden ist, die ausgebildet ist, um einen Umladestrom bei einem ausgeschalteten Zustand der Einrichtung (9) zum Abschalten des Erregungsstroms in den zweiten Knoten einzuspeisen.

13. Steuerschaltung gemäß Anspruch 12, die ferner eine Strombeaufschlagungseinrichtung (17) umfaßt, die ausgebildet ist, um der ersten Einrichtung (7) zum Feststellen des Ladungsschwellwerts einen von dem Umladestrom abhängigen Strom zuzuführen bei einem eingeschalteten Zustand der Einrichtung (9) zum Abschalten des Erregungsstroms.

14. Steuerschaltung gemäß Anspruch 12, die ferner eine Strombeaufschlagungsvorrichtung (19) umfaßt, die ausgebildet ist, um der zweiten Einrichtung zum Feststellen des Stromschwellwerts einen von dem Umladestrom abhängigen Strom zuzuführen bei einem eingeschalteten Zustand der Einrichtung (9) zum Abschalten des Erregungsstroms.

15. Verfahren zum Steuern einer Elektronenemissionsvorrichtung, die ausgebildet ist, um bei einer angelegten Spannung einen Erregungsstrom aufzunehmen, der mit einer Anzahl von emittierten Elektronen zusammenhängt, mit folgenden Schritten:
Feststellen (7), ob eine durch den Erregungsstrom transportierte Ladungsmenge einen vorbestimmten Ladungsschwellwert erreicht;
Feststellen (5), ob ein Betrag des Erregungsstroms einen vorbestimmten Stromschwellwert erreicht; und
Abschalten (9) des Erregungsstroms, sobald festgestellt wird, daß die Ladungsmenge einen vorbestimmten Ladungsschwellwert erreicht hat, oder sobald festgestellt wird, daß der Betrag des Erregungsstroms kleiner als der vorbestimmte Stromschwellwert ist.

16. Array zum Steuern einer Multielektronenemissionsvorrichtung, wobei die Multielektronenemissionsvorrichtung eine Mehrzahl von Elektronenemissionsvorrichtungen aufweist, mit folgenden Merkmalen:
einer Mehrzahl von Steuerschaltungen gemäß einem der Ansprüche 1 bis 9, wobei eine Steuerschaltung für eine Elektronenemissionsvorrichtung vorgesehen ist;
wobei jeder Steuerschaltung ein Identifikationsmerkmal zugeordnet ist, das die Elektronenemissionsvorrichtung in diesem Array eindeutig identifiziert; und
eine Überwachungseinrichtung zum Überwachen der Mehrzahl von Steuerschaltungen, die ausgebildet ist, um zu erfassen, ob bei einer Steuerschaltung der Betrag des Erregungsstroms einen vorbestimmten Schwellenwert erreicht;
wobei die Überwachungseinrichtung ausgebildet ist, um eine dauerhafte Deaktivierung der Steuerschaltung auf der Basis des Identifikationsmerkmals zu bewirken.

## Claims

1. Control circuit for controlling an electron-emitting device formed to draw, with a voltage applied, an excitation current being related to a number of electrons emitted, comprising:
first means (7) for determining whether an amount of charge transported by the excitation current has reached a predetermined charge threshold value;
second means (5) for determining whether a magnitude of the excitation current has reached a predetermined current threshold value; and
means (9) for switching off the excitation current as soon as the first means (7) determines that the amount of charge has reached a predetermined charge threshold value, or as soon as the second means (5) determines that the magnitude of the excitation current is smaller than the predetermined current threshold value.

2. Control circuit according to claim 1, further comprising:
means (11) for generating at least one auxiliary current being in a predetermined relation to the excitation current, wherein the first means (7) and/or the second means (5) are/is formed to operate on the basis of at least one auxiliary current.

3. Control circuit according to claims 1 or 2, wherein the first means (7) comprises:
a comparator (71) having a first input and a second input and an output, wherein a reference voltage used for determining the charge threshold value is at the first input; and
a capacity (73) for drawing an amount of charge transported by the auxiliary current, which is proportional to the amount of charge transported by the excitation current, connected to the second input of the comparator and another voltage source.

4. Control circuit according to claim 3, further including a controllable switch (75) connected in parallel to the capacity (73), which can be closed after a certain emission time of the electron-emitting device to discharge this capacity.

5. Control circuit according to claims 3 or 4, wherein the second means (5) comprises:
a comparator (51) having a first input and a second input, wherein a reference voltage used for determining the charge threshold value is applicable to the second input;
a current-voltage transformer (53) connected to a voltage source and to the second input of the comparator (51), formed to transform an auxiliary current into a voltage applicable to the first input of the comparator (51).

6. Control circuit according to claim 5, wherein the current-voltage transformer is a resistive element.

7. Control circuit according to claim 1, wherein the means (9) for switching off the excitation current comprises:
a transistor (91) having a control input, an input and an output, wherein a voltage, the magnitude of which does not fall below a value required for the electron emission of the electron-emitting device is applicable to the input.

8. Control circuit according to claim 7, including a capacity (C1) connected between the control input of the transistor (91) and ground to permanently store a control voltage applied.

9. Control circuit according to claims 2 and 7,
wherein the means (11) for generating at least one auxiliary current includes a current mirror having a first input, a second input and a third input and an output, the first input being connected to the output of the transistor (91);
wherein the second input is connected to the second input of the comparator (51);
wherein the third input is connected to the second input of the comparator (71); and
the current mirror being formed to generate, depending on a current flowing into the first input, a first auxiliary current flowing into the second input;
the current mirror being formed to generate, depending on the current flowing into the first input, a second auxiliary current flowing into the third input;
wherein the output is connected to ground.

10. Control circuit according to one of the preceding claims, including a logic circuit (13) formed to combine an output signal of the second means (5) for determining the current threshold value and an output signal of the first means (7) for determining the charge threshold value by means of an OR operation and to make available the result of this OR operation to the means (9) for switching off the excitation current.

11. Control circuit according to claim 10, further formed to make available the result of the OR operation, together with an identification feature of the control circuit, to a superordinated monitoring means.

12. Control circuit according to one of the preceding claims, wherein the means (9) for switching off the excitation current comprises a first node and a second node, wherein the first node is connectable to a voltage applied and wherein a conducting connection can be established between the first and second nodes by switching on, wherein the second node is connected to current-providing means (15) formed to feed a recharge current to the second node in a switched-off state of the means (9) for switching off the excitation current.

13. Control circuit according to claim 12, further including current-providing means (17) formed to feed to the first means (7) for determining the charge threshold value a current depending on the recharge current in a switched-on state of the means (9) for switching off the excitation current.

14. Control circuit according to claim 12, further including a current-providing device (19) formed to feed to the second means for determining the current threshold value a current depending on the recharge current in a switched-on state of the means (9) for switching off the excitation current.

15. Method for controlling an electron-emitting device formed to draw, with a voltage applied, an excitation current being related to a number of electrons emitted, comprising the steps of:
determining (7) whether an amount of charge transported by the excitation current has reached a predetermined charge threshold value;
determining (5) whether a magnitude of the excitation current has reached a predetermined current threshold value; and
switching off (9) the excitation current as soon as it is determined that the amount of charge has reached a predetermined charge threshold value, or as soon as it is determined that the magnitude of the excitation current is smaller than the predetermined current threshold value.

16. Array for controlling a multi-electron-emitting device, the multi-electron-emitting device comprising a plurality of electron-emitting devices, comprising:
a plurality of control circuits according to one of claims 1 to 9, one control circuit being provided for one electron-emitting device;
wherein an identification feature unambiguously identifying the electron-emitting device in this array is associated to each control circuit; and
monitoring means for monitoring the plurality of control circuits formed to detect whether, in a control circuit, the magnitude of the excitation current has reached a predetermined threshold value;
wherein the monitoring means is formed to effect a permanent deactivation of the control circuit on the basis of the identification feature.

## Revendications

1. Circuit de commande destiné à la commande d'un dispositif d'émission électronique, qui est réalisé pour absorber, à une tension appliquée, un courant d'excitation ayant un rapport avec un nombre d'électrons émis, aux caractéristiques suivantes :
un premier dispositif (7) destiné à constater si une quantité de charge transportée par le courant d'excitation atteint une valeur de seuil de charge prédéterminée ;
un deuxième dispositif (5) destiné à constater si une valeur du courant d'excitation atteint une valeur de seuil de courant prédéterminée ; et
un dispositif (9) destiné à interrompre le courant d'excitation dès que le premier dispositif (7) constate que la quantité de charge a atteint une valeur de seuil de charge prédéterminée ou dès que le deuxième dispositif (5) constate que la valeur du courant d'excitation est inférieure à la valeur de seuil de courant prédéterminée.

2. Circuit de commande selon la revendication 1, présentant, par ailleurs, la caractéristique suivante :
un dispositif (11) destiné à générer au moins un courant auxiliaire qui a un rapport prédéterminé avec le courant d'excitation, et le premier dispositif (7) et/ou le deuxième dispositif (5) étant réalisé pour fonctionner sur base d'au moins un courant auxiliaire.

3. Circuit de commande selon la revendication 1 ou 2, dans lequel le premier dispositif (7) présente les caractéristiques suivantes :
un comparateur (71) avec une première et une deuxième entrée et une sortie, à la première entrée étant présente une tension de référence qui est utilisée pour déterminer la valeur de seuil de charge ; et
une capacité (73), destinée à recevoir une quantité de charge transportée par le courant auxiliaire et qui est proportionnelle à la quantité de charge transportée par le courant d'excitation, laquelle est reliée à la deuxième entrée du comparateur et une autre source de tension.

4. Circuit de commande selon la revendication 3, comportant, par ailleurs, un interrupteur commandable (75) qui est connecté en parallèle avec la capacité (73), qui peut être fermé après un temps d'émission déterminé du dispositif d'émission électronique, pour décharger cette capacité.

5. Circuit de commande selon la revendication 3 ou 4, dans lequel le deuxième dispositif (5) présente les caractéristiques suivantes :
un comparateur (51) avec une première et une deuxième entrée, à la deuxième entrée pouvant être appliquée une tension de référence qui est utilisée pour déterminer la valeur de seuil de charge ;
un convertisseur courant-tension (53) relié à une source de tension et à la deuxième entrée du comparateur (51), qui est réalisé pour convertir un courant auxiliaire en une tension pouvant être appliquée à la première entrée du comparateur (51).

6. Circuit de commande selon la revendication 5, dans lequel le convertisseur courant-tension est un élément résistif.

7. Circuit de commande selon la revendication 5, dans lequel le dispositif (9) destiné à interrompre le courant d'excitation présente la caractéristique suivante :
un transistor (91) avec une entrée de commande, une entrée et une sortie, à l'entrée pouvant être appliquée une tension dont la valeur ne descend pas au-dessous d'une valeur nécessaire pour l'émission électronique du dispositif d'émission électronique.

8. Circuit de commande selon la revendication 7, comportant une capacité (C1) reliée entre l'entrée de commande du transistor (91) et une masse, pour accumuler en permanence une tension de commande appliquée.

9. Circuit de commande selon la revendication 2 et 7,
dans lequel le dispositif (11) destiné à générer au moins un courant auxiliaire comporte un courant en rapport géométrique avec une première, une deuxième et une troisième entrée et une sortie, la première entrée étant reliée à la sortie du transistor (91) ;
la deuxième entrée étant reliée à la deuxième entrée du comparateur (51) ;
la troisième entrée étant reliée à la deuxième entrée du comparateur (71) ; et
qui est réalisé pour générer, en fonction d'un courant entrant dans la première entrée, un premier courant auxiliaire qui entre dans la deuxième entrée ;
qui est réalisé pour générer, en fonction d'un courant entrant dans la première entrée, un deuxième courant auxiliaire qui entre dans la troisième entrée ;
la sortie étant reliée à une masse.

10. Circuit de commande selon l'une des revendications précédentes, comportant un circuit logique (13) qui est réalisé pour combiner un signal de sortie du deuxième dispositif (5) destiné à constater la valeur de seuil de courant et un signal de sortie du premier dispositif (7) destiné à constater la valeur de seuil de charge par un couplage OU, et pour mettre le résultat de ce couplage OU à disposition du dispositif (9) destiné à interrompre le courant d'excitation.

11. Circuit de commande selon la revendication 10, réalisé, par ailleurs, pour mettre le résultat de ce couplage OU, ensemble avec une caractéristique d'identification, à la disposition du circuit de commande d'un dispositif de surveillance supérieur.

12. Circuit de commande selon l'une des revendications précédentes, dans lequel le dispositif (9) destiné à interrompre le courant d'excitation présente un premier et un deuxième noeud, le premier noeud pouvant être relié à une tension appliquée et entre le premier et le deuxième noeud pouvant être établie, par un enclenchement, une connexion conductrice, le deuxième noeud étant relié à un dispositif de soumission à l'admission de courant (15) qui est réalisé pour alimenter un courant de recharge, à un état déclenché du dispositif (9) destiné à interrompre le courant d'excitation, vers le deuxième noeud.

13. Circuit de commande selon la revendication 12, comprenant, par ailleurs, un dispositif de soumission à l'admission de courant (17) qui est réalisé pour alimenter vers le premier dispositif (7) destiné à constater la valeur de seuil de charge un courant fonction du courant de recharge à un état enclenché du dispositif (9) destiné à interrompre le courant d'excitation.

14. Circuit de commande selon la revendication 12, comprenant, par ailleurs, un dispositif de soumission à l'admission de courant (19) qui est réalisé pour alimenter vers le deuxième dispositif destiné à constater la valeur de seuil de courant un courant fonction du courant de recharge à un état enclenché du dispositif (9) destiné à interrompre le courant d'excitation.

15. Procédé pour la commande d'un dispositif d'émission électronique qui est réalisé pour absorber, à une tension appliquée, un courant d'excitation qui a un rapport avec un nombre d'électrons émis, aux étapes suivantes consistant à :
constater (7) si une quantité de charge transportée par le courant d'excitation atteint une valeur de seuil de charge prédéterminée ;
constater si une valeur du courant d'excitation atteint une valeur de seuil de courant prédéterminée ; et
interrompre (9) le courant d'excitation dès qu'il est constaté que la quantité de charge a atteint une valeur de seuil de charge prédéterminée ou dès qu'il est constaté que la valeur du courant d'excitation est inférieure à la valeur de seuil de courant prédéterminée.

16. Rangée pour la commande d'un dispositif d'émission électronique multiple, le dispositif d'émission électronique multiple présentant une pluralité de dispositifs d'émission électronique, aux caractéristiques suivantes :
une pluralité de circuits de commande selon l'une des revendications 1 à 9, un circuit de commande étant prévu pour un dispositif d'émission électronique ;
à chaque circuit de commande étant associée une caractéristique d'identification identifiant de manière univoque le dispositif d'émission électronique dans cette rangée ; et
un dispositif de surveillance destiné à surveiller la pluralité de circuits de commande, qui est réalisé pour détecter si, dans un circuit de commande, la valeur du courant d'excitation atteint une valeur de seuil prédéterminée ;
le dispositif de surveillance étant réalisé pour provoquer une désactivation permanente du circuit de commande sur base de la caractéristique d'identification.
